# FASCICULE DE BREVET EUROPEEN

(11) **EP 2 036 774 B1**
(45) Date de publication et mention de la délivrance du brevet: **22.12.2010**
(21) Numéro de dépôt: 08300258.4
(22) Date de dépôt: 21.08.2008
(51) Int. Cl.: B60R 7/04

(54) **Console centrale de véhicule à butée flexible de la façade supérieure**
Mittelkonsole eines Fahrzeugs mit flexiblem Drucklager für die obere Fassade
Central vehicle console with flexible stopper on the top surface

(30) Priorité: 13.09.2007 FR 0706417
(43) Date de publication de la demande: 18.03.2009
(73) Titulaire: Renault s.a.s., 92100 Boulogne-Billancourt (FR)
(72) Inventeur: Chheang, Nakry, 78470 Saint Rémy les Chevreuses, (FR); Marceau, Thierry, 92500 Rueil Malmaison, (FR); Laumesfeld, Laurent, 92410 Ville d'Avray (FR)

(56) Documents cités:
- DE-A1- 10 257 123
- DE-A1-102005 003 877
- GB-A- 2 124 981
- US-A- 5 106 143

## Description

La présente invention concerne une console centrale de véhicule.

La console centrale est un caisson formé de deux parois latérales et d'une paroi ou façade supérieure pourvue d'une part d'ouvertures pour laisser passer le levier de changement de vitesse et le levier de frein à main et d'autre part d'aménagements de volumes accessoires, comme un compartiment de rangement éventuellement fermé par un couvercle ou un porte-gobelet.

Le levier de frein à main est généralement déporté du côté du conducteur de sorte qu'il laisse en zone centrale de la console une zone libre où il est possible de loger un équipement. Celui-ci peut différer selon la version du véhicule. Dans une version d'entrée de gamme, il s'agira par exemple, d'un simple porte-gobelet. Dans une version supérieure, il peut s'agir d'une commande IHM (interface homme-machine) de navigation. Quel que soit l'équipement, mais notamment pour une telle commande de navigation, il est opportun qu'il puisse supporter une charge verticale d'une certaine intensité, par exemple 25daN. Aussi faut-il s'assurer que l'équipement et son support trouveront sur la console un appui suffisant.

Pour des raisons esthétiques et techniques, le support de l'équipement et l'équipement lui-même sont préalablement assemblés sur la façade supérieure de console, laquelle constitue un sous-ensemble qui sera ensuite monté sur le reste de la console, une fois celle-ci montée sur le plancher du véhicule. Le support d'équipement est par exemple fixé par vis sur la façade supérieure, et l'équipement lui-même est monté sur son support par en dessous, sa tenue étant assurée par clipsage.

Le frein à main est fixé sur le plancher ainsi que le levier de commande de vitesse. Classiquement, on vient les habiller par-dessus avec le corps de console qui peut descendre jusqu'au plancher grâce à des ouvertures prévues dans la paroi supérieure du corps de la console pour le passage des deux organes issus du plancher. Ensuite, comme déjà indiqué, il ne reste qu'à monter le sous-ensemble constitué par la façade supérieure intégrant l'équipement et son support, pour faire la finition. La façade supérieure comporte elle-même, ou laisse avec la paroi supérieure du corps de console, juste ce qui est nécessaire d'ouvertures, de passage pour le débattement du frein à main et du levier de changement de vitesse.

Les larges ouvertures indispensables pour le montage du corps de console sont nuisibles à la solidité de la console. Aussi, pour que celle-ci puisse résister aux efforts latéraux et verticaux, on la renforce par une structure de doublure intérieure qui prend appui sur les parois latérales de la console et comporte au moins un barreau de liaison entre les parois.

En particulier, l'ouverture du corps de console destinée au passage du levier de frein à main, et la présence de celui-ci qui traverse la paroi supérieure de la console, rendent difficile d'assurer la solidité de l'appui du support de l'équipement supplémentaire logé en partie centrale de façade supérieure de console, au voisinage du frein à main.

DE 10 2005 003877 et GB 2124981 (qui a servi à établir le préambule de la revendication annexée 1) montrant divers types de consoles centrales où le problème du passage du levier de vitesse ne se passe pas dans les mêmes conditions.

Le but de la présente invention est de proposer une construction de console centrale qui, tout en permettant le montage qui vient d'être décrit, permette aussi d'offrir un appui sûr à la zone centrale de la façade supérieure, où se situe l'équipement supplémentaire.

L'invention atteint son but grâce à une console centrale destinée à être montée sur le plancher d'un véhicule automobile, et conforme à la revendication 1 annexée.

Selon un mode de réalisation intéressant, la console comporte une structure de renforcement intérieure doublant en partie les parois latérales et la butée flexible est réalisée dans cette structure de renforcement.

Dans un mode de réalisation particulier, l'organe traversant est le levier de frein à main.

La surface de la façade prenant appui dans la zone prédéterminée de la paroi latérale peut être notamment un porte-gobelet ou une commande IHM.

D'autres caractéristiques et avantages de l'invention ressortiront de la description suivante d'un exemple de réalisation. Il sera fait référence aux dessins annexés sur lesquels :
- la figure 1 est une vue en perspective de l'arrière montrant le plancher du véhicule et la console de l'invention en cours de montage.
- la figure 2 est une vue en perspective de détail montrant la structure de renforcement de la console de l'invention, au niveau de la zone prédéterminée d'appui.
- la figure 3 est une vue en perspective de détail montrant la console de l'invention équipée de sa structure de renforcement, au niveau de la zone prédéterminée d'appui.
- la figure 4 est une vue en coupe transversale de la console de l'invention équipée de sa façade supérieure, au niveau de la zone prédéterminée d'appui.
- la figure 5 est une vue de dessus de la console de l'invention équipée de sa façade supérieure.

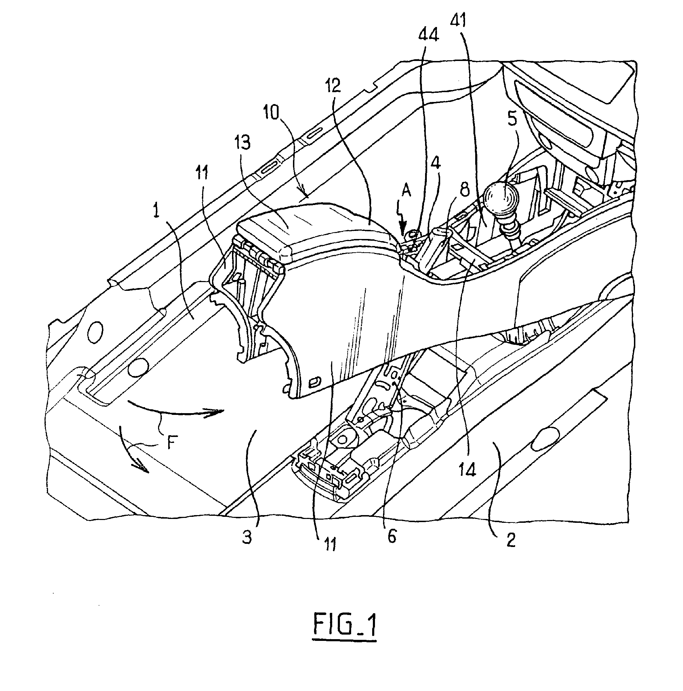

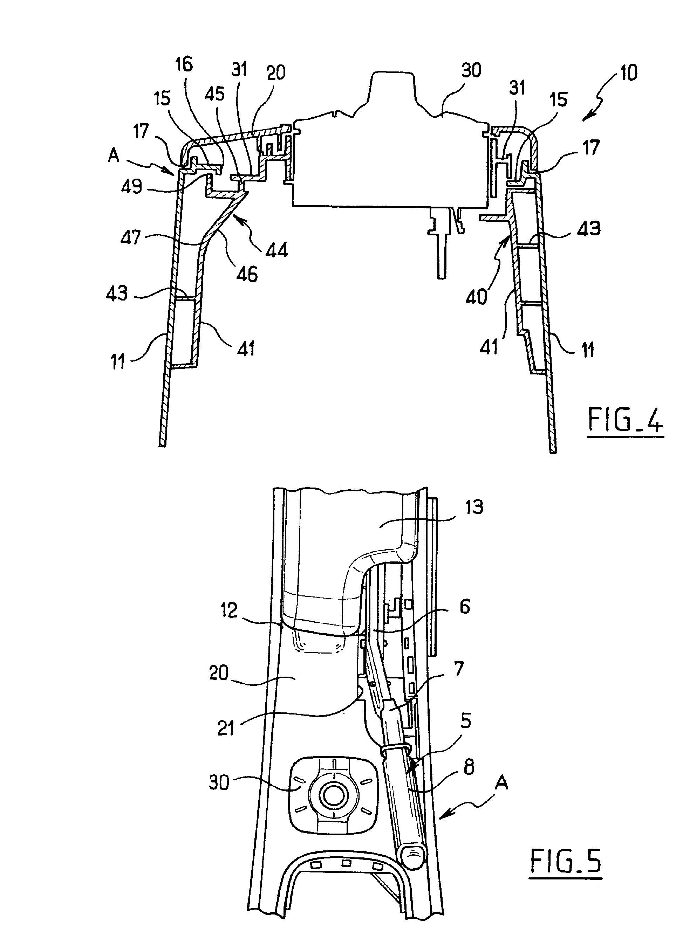

La figure 1 montre un plancher 1 de véhicule comportant un tunnel central 2 entre deux cuvettes d'emplacement de siège avant 3. Sur le tunnel 2 sont montés d'une part le levier de frein à main 4 et le levier de changement de vitesse 5. Le levier de frein à main 4, articulé à sa base, comprend une première partie de bras 6 (cf. figure 5), et une seconde partie de bras 7 terminée par la poignée 8. La poignée 8 est plus déportée vers le siège du conducteur que la première partie de bras 6, située plus près de l'axe du tunnel 2.

La console 10 comporte un corps de console formé des parois latérales 11 et d'une paroi supérieure 12, matériellement réduite, dans l'exemple illustré, au couvercle 13 d'un compartiment ouvrant de console, et à une grande ouverture entre les parois latérales, à l'avant dudit couvercle 13, cette grande ouverture étant traversée par un barreau de liaison 14 et étant destinée à être fermée par une façade supérieure 20 constituant un sous-ensemble. Comme le montre la figure 5, la paroi supérieure, formée du couvercle 13 et de la façade 20, laisse une ouverture réduite 21 de passage du levier de frein à main 5, suffisante pour la manoeuvre du frein à main.

La façade 20 incorpore une commande 30 IHM dans une région située juste derrière la poignée 8 du frein à main (dans le sens de la largeur du véhicule, du conducteur vers le passager) et derrière le levier de vitesse (dans le sens longitudinal du véhicule). C'est cette région qui doit pouvoir résister à des efforts verticaux et être donc en appui suffisant sur la console.

La console 10 comporte une structure intérieure de renforcement 40 obtenue par moulage et comprenant essentiellement deux parois latérales intérieures 41 venant former la doublure intérieure des parois 11, et réunies par un barreau transversal de matière 42 en partie supérieure. Les parois latérales 41 comportent à l'extérieur un nervurage 43 dans deux directions pour les rigidifier.

Dans la zone A qui doit correspondre à la zone d'appui, la paroi 41 voisine du frein à main comporte une patte flexible 44 définissant grâce à une nervure supérieure en U un plan horizontal d'appui supérieur 45, et comportant une rampe inclinée 46 et un pied 47 constituant une zone flexible. La patte flexible 44 est séparée latéralement de la paroi 41 par des échancrures verticales 48.

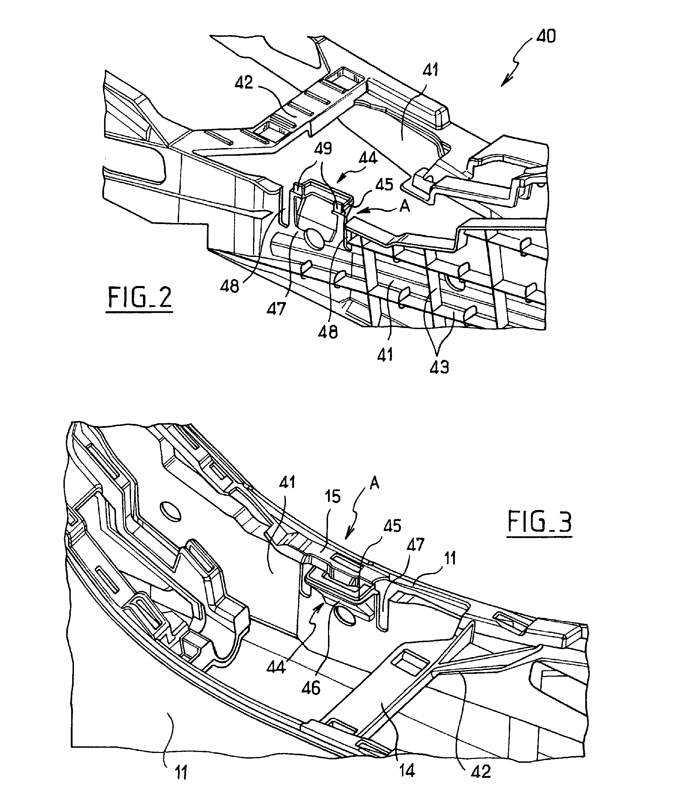

Quand la structure intérieure 40 est insérée dans la peau extérieure du corps de la console 10, on obtient l'architecture représentée en figures 1, 3 et 4. Le barreau 14 est soutenu par le barreau 42. La patte flexible 44 dépasse intérieurement du bord intérieur 15 prévu à la partie supérieure de la paroi 11 (figure 4) ; comme on le voit sur cette figure, la patte 44 est à une certaine distance de la face interne de la paroi extérieure 11 de sorte qu'elle peut s'escamoter en direction de celle-ci sans être gênée. La partie supérieure de la patte 44 comporte à l'arrière deux butées verticales 49 qui peuvent coopérer avec un rebord 16 retombant du bord 15, de manière à empêcher un mouvement de la patte 44 vers l'intérieur au-delà de sa position normale d'appui. La façade supérieure 20 vient reposer par ses bords sur un épaulement périphérique 17 formé en haut des parois latérales 11 de console. La commande IHM 30 est montée par en dessous pour dépasser de la façade 20 par une ouverture adéquate. Elle est montée dans un support 31 qui s'appuie d'une part, du côté opposé au levier de frein à main, sur la paroi intérieure 41 de la structure de renforcement 40 qui double la paroi 11, par l'intermédiaire du bord 15 (à droite de la figure 4), et d'autre part, du côté tourné vers le frein à main et donc plus éloigné de la paroi correspondante 11, sur le plan d'appui 45 de la patte 44 qui dépasse vers l'intérieur de la console. Cette structure offre donc un appui à la fois rapproché et ferme au support 31 de la commande IHM 30 ou de tout autre équipement qui serait prévu à cet endroit.

Lorsqu'il s'agit de monter la console 10 en place, comme représenté en figure 1, la façade 20 n'est pas encore en place. Le montage de la console 10 se fait par un mouvement de bascule illustré par les flèches F. Pendant ce mouvement, la paroi 11 située du côté du levier de frein à main doit passer très près des parties les plus déportées de celui-ci, notamment la poignée 8. Lors de ce mouvement, la patte d'appui 44 qui fait protubérance sur la doublure intérieure 41 de la paroi de la console 10 s'escamote à l'intérieur même de la paroi, entre la peau extérieure et la doublure intérieure, grâce à la rampe 46 qui permet à la patte 44 de glisser en s'escamotant en passant sur l'obstacle constitué par le frein à main. Une fois la console 10 fixée, la patte d'appui 44 reprend par élasticité sa position d'appui en saillie à l'intérieur de la doublure 41, de sorte qu'ensuite, lors de la pose de la façade supérieure 20, le support 31 de la commande 30 qui se trouve dans cette zone pourra être convenablement appuyé de chaque côté.

## Revendications

1. Console centrale (10) destinée à être montée sur le plancher (1) d'un véhicule automobile, formée de deux parois latérales (11, 41) et d'une paroi supérieure (12) pourvue d'au moins une ouverture destinée, lors du montage de la console (10) sur le plancher (1) du véhicule, au passage d'un organe (4) issu du plancher (1) du véhicule et traversant la console (10), la paroi supérieure recevant une façade supérieure (20) comportant une surface (31) couvrant au moins en partie ladite ouverture et prenant appui sur au moins un appui formé dans une zone de la paroi latérale, **caractérisée en ce qu'**une des deux parois latérales (11, 41) de la console comporte, au niveau de ladite ouverture, au moins une zone prédéterminée (A) qui passe lors du montage de la console (10) à proximité immédiate d'une partie dudit organe traversant (4) et s'en trouve plus éloignée une fois la console montée, la surface (31) couvrant ladite ouverture au niveau de ladite zone prédéterminée (A), ledit appui étant formé dans ladite zone prédéterminée (A) de paroi latérale et étant constitué par une butée flexible (44), moyennant quoi la butée (44) s'escamote vers l'extérieur lors du montage au passage de la partie à proximité de l'organe traversant (4) et reprend sa position de butée une fois la console (10) montée.

2. Console centrale selon la revendication 1, **caractérisée en ce qu'**elle comporte une structure de renforcement intérieur (40) doublant en partie les parois latérale (11) et la butée flexible (44) est réalisée dans cette structure de renforcement (40).

3. Console selon l'une quelconque des revendications 1 ou 2, **caractérisée en ce que** l'organe traversant est le levier de frein à main (4).

4. Console selon l'une quelconque des revendications précédentes, **caractérisée en ce que** la surface (31) de la façade (20) prenant appui dans la zone prédéterminée de la paroi latérale est un porte-gobelet ou une commande IHM.

## Claims

1. Central console (10) for mounting on the floor (1) of a motor vehicle, said console being made up of two side walls (11, 41) and an upper wall (12), the latter having at least one opening intended, during the mounting of the console (10) on the vehicle floor (1), for the passage of a member (4) projecting from the vehicle floor (1) and passing through the console (10), the upper wall receiving a top cover (20) comprising a surface (31) that at least partly covers said opening and is supported on at least one support formed in a region of the side wall; **characterized in that** one of the two side walls (11, 41) of the console comprises, at said opening, at least one predetermined region (A) which, during the mounting of the console (10), passes in the immediate vicinity of a part of said through member (4) and is more distant from it once the console is mounted, the surface (31) covering said opening at said predetermined region (A), said support being formed in said predetermined side-wall region (A) and being formed by a flexible stop (44), by means of which the stop (44) retracts in the outward direction during mounting as it passes the part in the vicinity of the through member (4) and resumes its stop position once the console (10) is mounted.

2. Central console according to Claim 1, **characterized in that** it comprises an internal reinforcing structure (40) which partly lines the side walls (11), and the flexible stop (44) is formed in this reinforcing structure (40).

3. Consol according to either of Claims 1 and 2, **characterized in that** the through member is the handbrake lever (4).

4. Consol according to any one of the preceding claims, **characterized in that** the surface (31) of the cover (20) which is supported in the predetermined region of the side wall is a cup holder or an MMI control.

## Patentansprüche

1. Mittelkonsole (10), die dazu bestimmt ist, auf dem Boden (1) eines Kraftfahrzeugs montiert zu werden, und aus zwei Seitenwänden (11, 41) und einer oberen Wand (12) gebildet ist, die mit mindestens einer Öffnung versehen ist, die bei der Montage der Konsole (10) auf dem Boden (1) des Fahrzeugs für das Passieren eines Glieds (4) bestimmt ist, das vom Boden (1) des Fahrzeugs ausgeht und durch die Konsole (10) geht, wobei die obere Wand eine obere Blende (20) aufnimmt, die eine Oberfläche (31) umfasst, die die Öffnung mindestens teilweise abdeckt und sich auf mindestens einer Stütze abstützt, die in einem Bereich der Seitenwand ausgebildet ist, **dadurch gekennzeichnet, dass** eine der beiden Seitenwände (11, 41) der Konsole an der Öffnung mindestens einen vorbestimmten Bereich (A) umfasst, der bei der Montage der Konsole (10) in unmittelbarer Nähe eines Teils des durchgehenden Glieds (4) vorbeigeht und nach der Montage der Konsole etwas weiter entfernt davon ist, wobei die Oberfläche (31) die Öffnung am vorbestimmten Bereich (A) abdeckt und die Stütze im vorbestimmten Bereich (A) der Seitenwand ausgebildet ist und aus einem flexiblen Anschlag (44) besteht, wodurch sich der Anschlag (44) bei der Montage beim Passieren des Teils in der Nähe des durchgehenden Glieds (4) nach außen einzieht und seine Anschlagposition wieder einnimmt, wenn die Konsole (10) montiert ist.

2. Mittelkonsole nach Anspruch 1, **dadurch gekennzeichnet, dass** sie eine innere Verstärkungsstruktur (40) umfasst, die zum Teil die Seitenwände (11) ausfüttert, und der flexible Anschlag (44) in dieser Verstärkungsstruktur (40) ausgeführt ist.

3. Konsole nach Anspruch 1 oder 2, **dadurch gekennzeichnet, dass** das durchgehende Glied der Handbremshebel (4) ist.

4. Konsole nach einem der vorhergehenden Ansprüche, **dadurch gekennzeichnet, dass** die Oberfläche (31) der Blende (20), die sich im vorbestimmten Bereich der Seitenwand abstützt, ein Trinkgefäßhalter oder eine Mensch-Maschine-Schnittstellenbedienung ist.
